# EUROPEAN PATENT APPLICATION

(11) **EP 3 531 402 A1**
(43) Date of publication of application: **28.08.2019**
(21) Application number: 18158848.4
(22) Date of filing: 27.02.2018
(51) Int. Cl.: G09F 3/20

(54) **ELECTRONIC SHELF LABEL AND METHOD THEREFORE**

(71) Applicant: Pricer AB, 111 64 Stockholm (SE)
(72) Inventor: Sjödin, Håkan, 111 64 Stockholm (SE)
(74) Representative: AWA Sweden AB

(57) **Abstract**

There is provided a method and electronic shelf label, ESL, 100 comprising a multi-stable display 105 for displaying information and a battery 104 for providing electrical power to the ESL, which ESL is arranged for indicating when a battery power level of the battery reaches a level insufficient for providing reliable updating of the multi-stable display. The remaining power level of a battery providing electric power to the ESL is monitored by means of a battery control means 106 for determining if the power level of the battery drops below a first preselected threshold value corresponding to a critical power level, and in response thereof the multi-stable display is updated according to a first predetermined information associated with the critical power level.

## Description

### TECHNICAL FIELD

The present invention relates to a method for indicating low power level of an electronic shelf label comprising a battery and a corresponding electronic shelf label device.

### BACKGROUND OF THE INVENTION

In different types of stores, for example supermarkets etc., electronic shelf labels, also referred to as ESLs, are used for displaying information about the different products offered in the store. The information displayed is for example the name and type of product as well as the price for each of the products. In an ESL system of a store, the electronic shelf labels are typically communicating with a central control unit which makes it possible to update and change the information displayed on the labels which saves a considerable amount of time for the persons working in the store, especially if the number of different products sold in the store is high. As an example, a supermarket offers between 50000 and100000 different products.

It is known to use bistable displays in ESLs, like electronic paper (or e-paper) devices, which has the advantage that the bistable display is only turned on when it is desired or needed to change and update the information displayed on the ESL. Furthermore, many display technologies hold static text and images indefinitely without electricity. There are many known approaches to bistable displays including e-paper, or electrophoretic arrangements, modifications of liquid crystal displays, electrochromic displays and multi-stable smectic LCDs etc.

Wireless communication with the central control unit (or locally by means of e.g. an IR device or other contact-less means) via transmitting and receiving means arranged in each ESL device is typically used to update pricing information or other information (label information) displayed on the ESL. In the example of a grocery store or retailer, each ESL device is provided with one or more batteries to provide power to the ESL when the information displayed on the ESL is updated. Since each battery stores a limited amount of energy, and it is known that standby leakage current while the ESL is also in standby mode depletes battery life significantly, the labels are either disposed and replaced by a new label when the battery is empty, or alternatively the batteries must be replaced to ensure that the ESL device can be updated. Replacing the battery when needed or exchanging ESL devices with empty batteries is a labor intensive operation for a store of any size with many ESLs, and if not attended to in time, the risk of displaying incorrect product and price information due to non-updated ESL labels increases. There is consequently a need for an improved electronic shelf label arrangement to better attend to ESLs in which the battery has reached a critically low power level.

### SUMMARY OF THE INVENTION

The present invention as defined in the appended claims, provides an electronic shelf label device and method therefore that fulfils the needs defined above.

According to a first aspect of the inventive concept, there is provided a method for indicating a battery power level of an electronic shelf label, ESL, device comprising a multi-stable display for displaying information, in which the remaining power level of a battery providing electric power to the ESL is monitored for determining if the power level of the battery drops below a first preselected threshold value corresponding to a critical power level, and in response thereof updating the multi-stable display according to a first predetermined information associated with the critical power level. The first predetermined information is preferably selected to in a distinct manner reflect the fact that the ESL is no longer responsive to updates with new label information, thereby controlling the displayed information such that no misleading price information is displayed to customers. This further facilitates for the staff to visually identify which ESL devices are out of power and needs to be attended to, either by exchanging the battery or by replacing the ESL device.

According to embodiments of the invention, the first predetermined information is selected from one of a stable state of the multi-stable display, which is advantageous, a black image, a color image, a preselected word, and a preselected symbol, where the color, word or symbol is preferably selected to clearly distinguish ESL devices which are reaching the critical power level of the battery, or which are out of power, from functioning ESL devices whose batteries have a remaining capacity sufficient to enable reliable updates of their label information.

According to an embodiment, an alarm device on the ESL or in a central control system is activated as the critical power level of the battery is reached. Such an alarm may advantageously be provided by connecting a light emitting diode to the battery, thereby utilizing the last of the remaining power to help identify the ESL to the staff. Another applicable alarm device may be an audio alarm.

According to an embodiment, the method further comprises sending an out of power message to an external central control system arranged for providing label information to the ESL device, which is advantageous to identify out of power ESLs, and to prevent the central control system from pushing updates to the non-responsive ESL.

According to an embodiment, the method further comprising before the step of determining if the power level of the battery drops below the first preselected threshold value determining if the power level of the battery drops below a second preselected threshold value selected between 30 - 50% of full power level, and in response thereof: sending a battery status message to the external central control system arranged for providing label information to the ESL device, thereby indicating that the remaining battery capacity (or life time) has decreased as compared to the fully charged battery status, and that maintenance is required within a near future.

According to an embodiment, the method further comprises before the step of determining if the power level of the battery drops below the first preselected threshold value determining if the power level of the battery drops below a third preselected threshold value selected between 10 - 29% of full power level, and in response thereof: updating at least a sub portion of the multi-stable display according to a second predetermined information associated with a low power level while still displaying current label information on the multi-stable display. The second predetermined information is preferably selected to provide a visual indication that the remaining battery is decreasing and approaching a critical level, e.g. by providing a specific color, a symbol or word indicating low power.

According to a second aspect of the inventive concept, there is provided an electronic shelf label, ESL, device comprising a battery for supplying electric power to the ESL, a multi-stable display element for displaying information, an ESL control means arranged for updating the information of the multi-stable display, and battery control means arranged for monitoring a remaining power level of the battery, and notifying the ESL control means when the power level of the battery drops below a first preselected threshold value, corresponding to a critical power level of the battery. The ESL control means is further arranged for in response to being notified updating the multi-stable display element according to a first predetermined information associated with the critical power level. The first predetermined information is according to embodiments of the ESL device selected from one of a stable state of the multi-stable display, a black image, a color image, a preselected word, and a preselected symbol. The ESL may further comprise an alarm device which is activated when the power level of the battery drops below the first preselected threshold value, and may further comprise a transmitting and receiving means connected to the ESL control means for enabling communication with an external central control system, in which case the ESL control means may further be arranged to send an out of power message to the central control system.

According to an embodiment of the ESL, the battery control means is further arranged for notifying the ESL control means when the power level of the battery drops below a second preselected threshold value selected between 30 - 50% of full power level. The ESL control means is arranged for in response thereof sending a battery status message to the central control system.

According to an embodiment of the ESL, the battery control means is further arranged for notifying the ESL control means when the power level of the battery drops below a third preselected threshold value selected between 10 - 29% of full power level. The ESL control means is arranged for in response thereof updating at least a sub portion of the multi-stable display according to a second predetermined information associated with a low power level while still displaying current label information on the multi-stable display.

According to an embodiment of the ESL and/or method the critical power level of the battery is selected between 1 - 9% of full power level. Further, according to an embodiment the multi-stable display element comprises e-paper. As used herein, electronic paper, e-paper, or electronic ink display are interchangeable terms used to reference display technology that mimics the appearance of ordinary ink on paper by reflecting light like ordinary paper. It is able to hold text and images indefinitely without drawing electricity, unlike a conventional flat panel display that illuminate's pixels or a reflective LCD display that requires regular screen content refresh.

Note that although the detailed description exemplifies bistable displays, displays with e.g. displays with multi-stable states, e.g. multi-stable electrophoretic displays with gray scale (as mentioned in e.g. Acrylates-Advances in Research and Application: 2013 Edition and U.S. Pat. No. 7,170,570), etc. are applicable within the present inventive concept.

The advantages described for the respective embodiments of the method described above apply also to the corresponding embodiments of the ESL according to the current inventive concept.

Further objectives of, features of, and advantages with, the present invention will become apparent when studying the following detailed disclosure, the drawings and the appended claims. Those skilled in the art realize that different features of the present invention can be combined to create embodiments other than those described in the following.

### BRIEF DESCRIPTION OF THE DRAWINGS

The above will be better understood through the following illustrative and non-limiting detailed description of preferred embodiments of the present invention, with reference to the appended drawings, where the same reference numerals will be used for similar elements, and wherein:
Fig. 1a is a schematic block diagram of an ELS device according to an embodiment of the present inventive concept, and Fig. 1b is a schematic illustration of battery power level over time;
Figs. 2 and 4 are flow charts illustrating different embodiments of a method according to the present inventive concept; and
Fig. 3 is an illustrative front view of an ELS device during different battery capacity conditions.
All the figures are schematic, not necessarily to scale, and generally only show parts which are necessary in order to elucidate the invention, wherein other parts may be omitted or merely suggested.

### DETAILED DESCRIPTION OF PREFERRED EMBODIMENTS

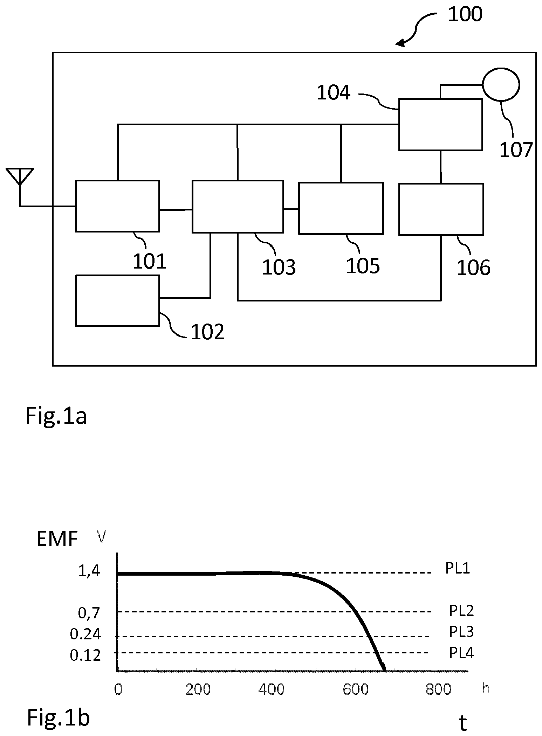

Fig. 1 shows a schematic block diagram of an embodiment of an ESL 100 in accordance with the present invention. ESL 100 includes a bistable display element 105 for displaying information, such as item price and related data. The display element 105 may be any type of multi-stable display element but is here exemplified by means of a bistable e-paper device. ESL 100 further includes a transmitting and receiving means 101 (optional), comprising a transmitter for transmitting messages and a receiver for receiving messages over a wireless communication network e.g. from an external control system arranged for controlling multiple ESLs (not shown). In an alternative embodiment the ESL may be individually updated by means of e.g. a hand held communication device. The transmitting and receiving means 101 may utilize RF communication, IR communication, induction, a wired link or some combination of communication techniques. A battery 104 provides electric power for the operation of ESL 100. A battery control means 106 is arranged for monitoring a remaining power level of the battery e.g. by utilizing an analog-to-digital converter (ADC) or comparator with window function for monitoring the battery electromotive force (EMF) of the battery under load which is measured in voltage (at e.g. room temperature).

An illustrative curve of a battery EMF over time is plotted in Fig. 1b to provide a simplified picture of the discharging of the battery connected to a load over time. Initially the battery is fully charged which is represented by EMF-level PL1 in Fig. 1b. PL2 represents when the power level of the battery has dropped to approximately 50% of the fully charged battery, PL3 represents approximately 17% and PL4 approximately 9% of the fully charged battery.

Referring now to Fig. 1, the operation of ESL 100 is controlled by ESL control means, which is arranged for updating the information of the multi-stable display, and which herein after referred to as ESL circuitry 103. The ESL circuitry 103 comprises processing means and is arranged for decoding incoming messages received, and to perform any actions indicated by the messages. For example, if a price change message is received, the ESL circuitry 103 would cause the display 105 to be updated with the new price information. ESL memory 102 includes a plurality of registers, which may contain many types of information. For example, the memory 102 may include display images and registers which contain the actual text to be displayed by the ESL 100. This text may include item price, informative or promotional text, text directed to store employees, and the like. Other registers may contain data which controls various parameters related to the display of the text, such as display register selection and timing sequences, for example.

ELS 100 includes an alarm 107 (optional) which may be provided by e.g. a small sonic device or a light emitting diode which according to an embodiment is connected via a switch to the battery 104 when activated, to utilize the last power available from the battery as the critical level of the battery is reached.

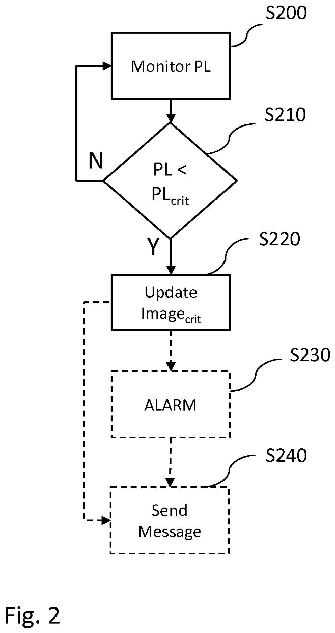

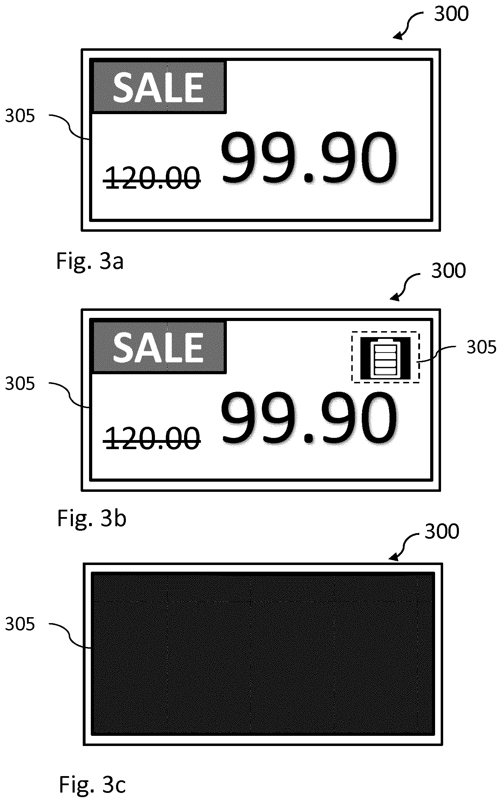

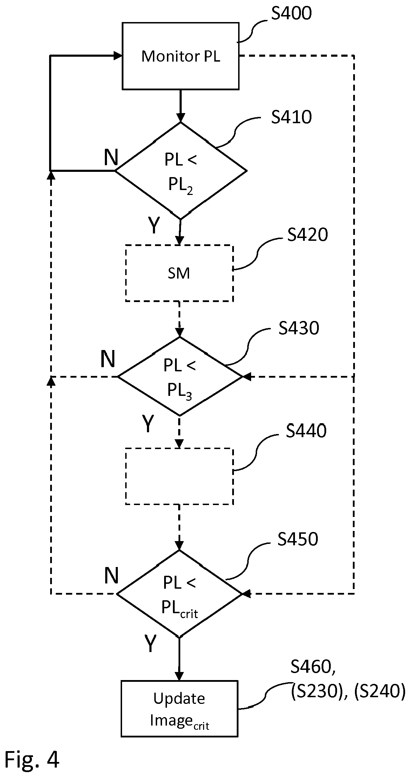

Referring now to Figs. 2 and 3, which illustrates a method for indicating a battery power level of an electronic shelf label, ESL, device 300 illustrated in Fig. 3a, which ELS 300 comprises a multi-stable display 305 for displaying label information, here sales and price information represented by the words "SALE", and "99.90". The method, which is illustrated in the flow chart in Fig. 2, also illustrates functionalities with respect to embodiments of the ELS described with reference to Fig. 1. In a first step S200 a remaining power level (PL) of the battery providing electric power to the ESL is monitored. In a following step S210 the battery control means or optionally the ELS circuitry determines if the power level PL of the battery drops below a first preselected threshold value corresponding to a critical power level (PL_{crit}) of the battery. If this is true (Y), in step S220, the multi-stable display device is updated according to a first predetermined information associated with the critical power level. This first predetermined information may refer to an image, word or symbol (which may be stored in the memory 102 of the ELS 100 in Fig. 1) or may be provided as one of the inherent stable states of the multi-stable display, which for a black and white bistable display may correspond to updating the bistable display 300 to produce a completely black display 305 as illustrated in Fig. 3c. According to an embodiment, in a further step S230 an alarm device is activated, e.g. alarm 107 in ELS 100 in Fig. 1 is (directly or indirectly) connected to the battery 104 thereby utilizing the last remaining power to create an alert to the staff that the ELS is soon non-responsive. In step S240 (which may optionally follow directly after step S220 without activating an alarm, the method may further comprises sending an out of power message to the external central control system arranged for providing label information to the ESL device. Dashed boxes and arrows in the flow charts in Figs. 2 and 4 indicate optional steps.

Referring now to Fig. 4, further embodiments of the method for indicating a battery power level of an electronic shelf label, ESL, are described. The method comprises a first step of monitoring the power level of the battery of the ELS, S400 in Fig. 4 which is followed by step S410 in which it is determined if the power level PL of the battery drops below a second preselected threshold value (PL2) selected between 30 - 50% of full power level. If this is true, in a next step S420, a battery status message (SM) is sent to the external central control system in which the ELS is part of. In step S430 it is determined if the power level PL of the battery drops below a third preselected threshold value (PL3) selected between 10 - 29% of full power level. If this is true, in a next step S440 at least a sub portion of the multi-stable display is updated according to a second predetermined information associated with a low power level while still displaying current label information on said multi-stable display, compare sub portion 305 on the display device 305 of ELS 300 as illustrated in Fig. 3b, which has been updated with a battery icon to indicate that the ELS 300 has reached a low power level defined by PL2. In a next step S450 the battery control means or optionally the ELS circuitry determines if the power level PL of the battery drops below the first preselected threshold value, which as described above corresponds to a critical power level (PL_{crit}) of the battery. If this is true (Y), in step S460, the multi-stable display device is updated according to a first predetermined information associated with the critical power level. This first predetermined information may refer to an image, word or symbol (which may be stored in the memory 102 of the ELS 100 in Fig. 1) or may be provided as one of the inherent stable states of the multi-stable display, which for a black and white bistable display may correspond to updating the bistable display 300 to produce a completely black display 305 as illustrated in Fig. 3c. Similar to step S220 as described with reference to Fig. 2, step S460 may be followed by further steps (corresponding to steps S230, S240 in Fig. 2) to active an alarm device and/or for sending an out of power message to the external central control system arranged for providing label information to the ESL device.

The different embodiments described above could all be combined and modified in different ways without departing from the scope of the invention that is defined by the appended claims.

## Claims

1. A method for indicating a battery power level of an electronic shelf label, ESL, device comprising a multi-stable display for displaying information, said method comprising:
monitoring a remaining power level of a battery providing electric power to said ESL;
determining if the power level of the battery drops below a first preselected threshold value corresponding to a critical power level, and in response thereof:
updating said multi-stable display according to a first predetermined information associated with said critical power level.

2. An ESL according to claim 1, wherein said first predetermined information is selected from one of a stable state of said multi-stable display, a black image, a color image, a preselected word, and a preselected symbol

3. A method according to claim 1 or claim 2, further comprising activating an alarm device.

4. A method according to any preceding claim, further comprising:
sending an out of power message to an external central control system arranged for providing label information to said ESL device.

5. A method according to any preceding claim, further comprising before the step of determining if the power level of the battery drops below said first preselected threshold value:
determining if the power level of the battery drops below a second preselected threshold value selected between 30 - 50% of full power level, and in response thereof:
sending a battery status message to an external central control system arranged for providing label information to said ESL device.

6. A method according to any of preceding claim, further comprising before the step of determining if the power level of the battery drops below said first preselected threshold value:
determining if the power level of the battery drops below a third preselected threshold value selected between 10 - 29% of full power level, and in response thereof:
updating at least a sub portion of said multi-stable display according to a second predetermined information associated with a low power level while still displaying current label information on said multi-stable display.

7. An electronic shelf label, ESL, device (100) comprising:
a battery (104) for supplying electric power to said ESL;
a multi-stable display element (105) for displaying information;
an ESL control means (103) arranged for updating said information of said multi-stable display; and
battery control means (106) arranged for monitoring a remaining power level of said battery, and notifying said ESL control means when the power level of the battery drops below a first preselected threshold value, corresponding to a critical power level of said battery, wherein said ESL control means is further arranged for in response to being notified updating said multi-stable display element according to a first predetermined information associated with said critical power level.

8. An ESL according to claim 7, wherein said first predetermined information is selected from one of a stable state of said multi-stable display, a black image, a color image, a preselected word, and a preselected symbol.

9. An ESL according to claim 7 or 8, wherein said ESL further comprises an alarm device which is activated when the power level of the battery drops below said first preselected threshold value.

10. An ESL according to any of claims 7 - 9, further comprising a transmitting and receiving means connected to said ESL control means for enabling communication with an external central control system, wherein said ESL control means is further arranged to send an out of power message to said central control system.

11. An ESL according to any of claims 7-10, wherein said battery control means is further arranged for notifying said ESL control means when the power level of the battery drops below a second preselected threshold value selected between 30 - 50% of full power level, wherein said ESL control means is arranged for in response thereof sending a battery status message to said central control system.

12. An ESL according to any of claims 7-12, wherein said battery control means is further arranged for notifying said ESL control means when the power level of the battery drops below a third preselected threshold value selected between 10 - 29% of full power level, wherein said ESL control means is arranged for in response thereof updating at least a sub portion of said multi-stable display according to a second predetermined information associated with a low power level while still displaying current label information on said multi-stable display.

13. An ESL according to any preceding claim, wherein said critical power level is selected between 1 - 9% of full power level

14. A method or ESL according to any preceding claim, wherein said multi-stable display element comprises e-paper.
